# EUROPEAN PATENT SPECIFICATION

(11) **EP 2 693 072 B1**
(45) Date of publication and mention of the grant of the patent: **13.01.2016**
(21) Application number: 12179140.4
(22) Date of filing: 03.08.2012
(51) Int. Cl.: F16F 1/387

(54) **Flexible mounting**
Flexible Montage
Montage flexible

(43) Date of publication of application: 05.02.2014
(73) Proprietor: ROBERT BOSCH GMBH, 70442 Stuttgart (DE)
(72) Inventor: Johnson, William A., Needham Market IP6 8JJ Suffolk Ipswich (GB); Coussins, Adrian, Stowmarket IP14 1TT Suffolk (GB)

(56) References cited:
- EP-A1- 1 930 049
- DE-C- 934 800
- FR-A1- 2 945 982
- GB-A- 692 691
- GB-A- 1 268 575
- US-A- 2 915 306
- US-A1- 2010 055 999

## Description

The present invention relates to a flexible mounting, especially for an outer shell of an apparatus, particularly for a robotic apparatus.

Self-guided, autonomous or robotic household apparatus such as lawnmowers or vacuum cleaners are well known. Current garden robotic lawn mowers generally have a substantial peripheral bumper or a complete shell covering the whole mower, elastically-mounted to a chassis, in which are mounted a motor and cutter components. When contact with an external object occurs, the bumper or shell becomes momentarily stationary but the mower itself continues to move and the resultant travel between the mower and the shell triggers a conventional electrical switch.

The flexible outer shell needs to move around, or "float" both horizontally and vertically. This movement can then be used to activate multifunction safety sensors to detect obstacles, the lifting of the product or someone sitting or resting on the product.

The present invention seeks to provide a flexible mounting, which allows movement in both the horizontal and vertical directions, allowing greater stiffness or resilience in the vertical plane.

A similar mounting is known from the GB 1 268 575. This problem is solved by the features of the characterizing portion of claim 1.

Accordingly, the invention provides a connecting means for connecting a first and second sections of an apparatus, the connecting means comprising a first mounting means, wherein the first mounting means comprises an inner hub, an outer section and a plurality of flexible spokes joining the inner hub with the outer section.

Preferably, there is provided second mounting means comprising a rigid anchoring section with attachment means for attaching the anchoring section to the first section of the apparatus, a rigid ridge to allow attachment to the outer section of the first mounting means and an elongate aperture, wherein the first section is connected to the inner hub by means of a shaft section passing through the elongate aperture of the second mounting means, such as to allow relative displacement between the first and the second sections.

Preferably the outer ring and the rigid ridge are substantially circular.

Preferably, at least one spoke in the first mounting comprises a dog-leg shaped section.

Preferably, there are at least three spokes in the first mounting. More preferably there are at least four spokes. Still more preferably there are exactly four spokes in the first mounting.

Preferably, a first angle is defined between a vertical line through the hub and a slope between a point connecting one of the spokes with the outer ring and a point connecting the spoke with the hub and wherein a second angle is defined between a horizontal line through the hub and a slope between a point connecting the spoke with the outer ring and a point connecting the spoke with the hub, and wherein the second angle is greater than the first angle.

Preferably the first angle is substantially 30°.

Preferably the spokes which in operation are above the hub, are shorter than those which in operation are below the hub.

Preferably the hub, spoke and the outer section of the first mounting are constructed from an elastomer material.

Preferably the inner hub, spoke and outer section are integrally formed.

The present invention also provides a robotic apparatus comprising a connecting section described above.

Suitably the robotic apparatus is a robotic lawn mower.

The above and other aspects of the invention will now be described in further detail, by way of example only, with reference to the accompanying drawings in which:
Figure 1 is a three quarters cut away view of a typical appliance in the form of a lawn mower, illustrating an outer shell located over a main body of the appliance;
Figure 2 illustrates a first mounting means according to an embodiment of the invention, in its unstressed condition;
Figure 3 shows an exploded view of an embodiment of a mounting mechanism;
Figure 4 illustrates a mounting according to an embodiment of the invention, attached to the main body of the appliance;
Figure 5 is a cross sectional view of a mounting located between the outer shell and the main body of the appliance;
Figure 6 illustrates a mounting according to an embodiment of the invention, with horizontal deflection applied;
Figure 7 illustrates a mounting according to an embodiment of the invention, with vertical deflection applied and
Figure 8 represents graphically a relationship between force and vertical and horizontal displacements.

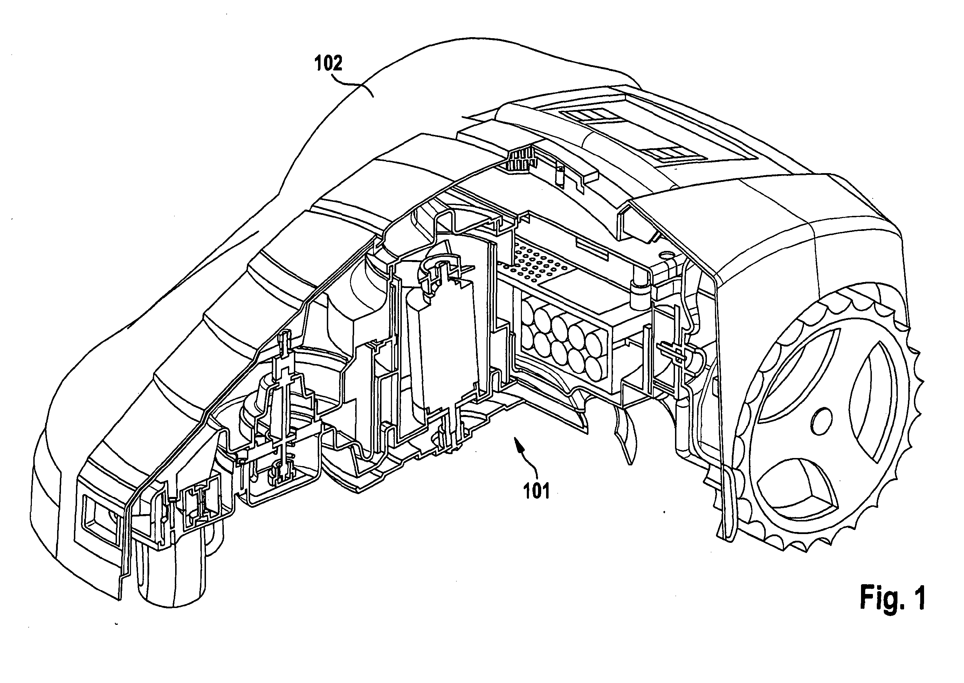

Referring to the Figures, Figure 1 illustrates a robotic lawnmower, which is a typical appliance for which the invention is designed. It comprises a main body 101 of the appliance, which comprises the control electronics, motor, batteries and other components of the device, and the outer shell 102. The outer shell 102 acts as a protection for the appliance, both from physical damage and from the environment. It also acts as part of a mechanism for detecting collisions and moving around obstacles. In normal use, a robotic device such as a lawnmower will encounter obstacles. When contact with an external object occurs, the bumper or shell becomes momentarily stationary but the mower itself continues to move and the resultant travel between the mower and the shell triggers a conventional electrical switch. Once this has occurred, power to the mower driver is removed, but there may be a further small movement before coming to rest.

In addition to the horizontal sensors, safety sensors may be provided to activate in the event of the lifting of the product or someone sitting or resting on the appliance. A mounting according to the invention provides a connection between the main body and outer shell, allowing relative movement between the two sections and provides some damping to that movement. Damping is useful to avoid actuation of the sensors in response merely to undulating ground etc.

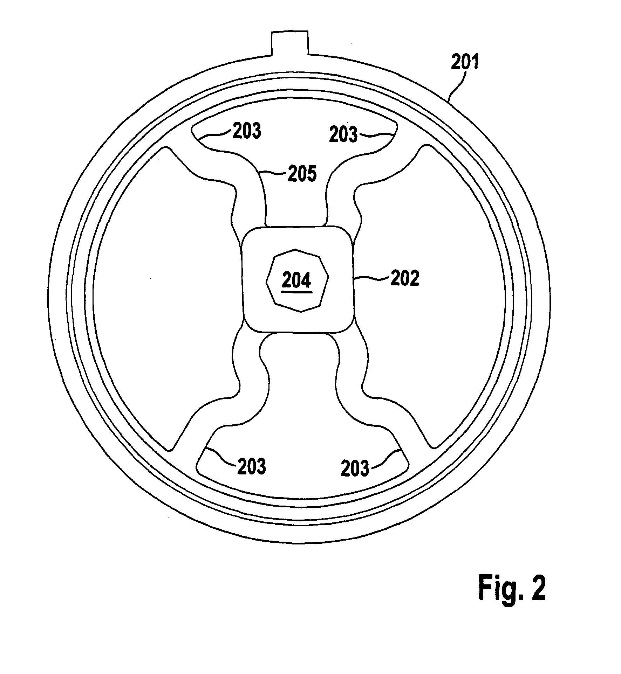

Figure 2 shows a mounting according to an embodiment of the invention, in ***its*** free or unloaded condition. The mounting comprises an outer ring 201, an inner hub 202 and spoke 203. The inner hub 202 has a central aperture 204 for the attachment of the outer shell (not shown). Figure 2 illustrates the preferred embodiment with four spokes, but the person skilled in the art will appreciate that embodiments with 3 spokes and more than four spokes are also possible. In the three spoke embodiment, two spokes are located on the side of the hub which, in operation, is below the hub and the third spoke located, in operation, above the hub. This arrangement provides sufficient stability for the outer shell. More spokes may be used to provide greater rigidity. In the preferred embodiment, a "dog-leg" kink 205 in each spoke is provided to allow stretching and compression of the spokes. The dog-leg shape allows the spoke to uncoil or coil further in the event of application of a deflection on the hub.

As shown in Figure 2, each spoke is of a relatively small width and hence small cross-section. This cross-section is substantially uniform along the length of the spoke. The direct distance between the two ends of the spoke is substantially greater than the width typically between four and five times while the true length is typically between five and six times the width by virtue of the dog leg construction. Although the person skilled in the art will appreciate that different ratios may be used, these proportions have been determined to be optimal for permitting large deflections without the mounting stiffness increasing to too great a value. It will be noted that the horizontal mounting stiffness in conjunction with the distance taken by the mower to detect contact with an obstruction and come to a stop will define the maximum contact force with the obstruction. The lower this force can be maintained the less likely the mower is to be damaged or overturn any obstruction such as flower pots etc.

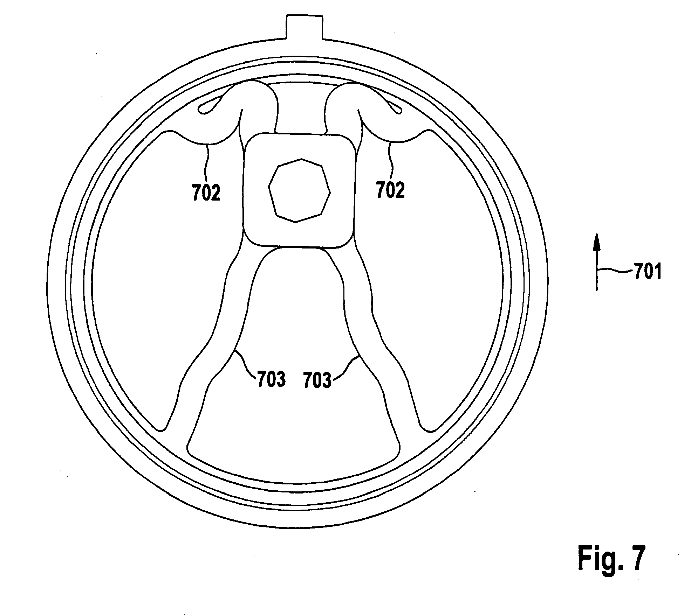

On the other hand the vertical stiffness is required to be substantially stiffer as it is linked only to the detection of sitting on or lifting the product. In this direction it can be seen (Figure 7) that as the "humps" of the dog-legs are oriented away from the horizontal and towards the vertical they naturally collapse on themselves to provide a direct buffer between the hub and the outer ring of the design.

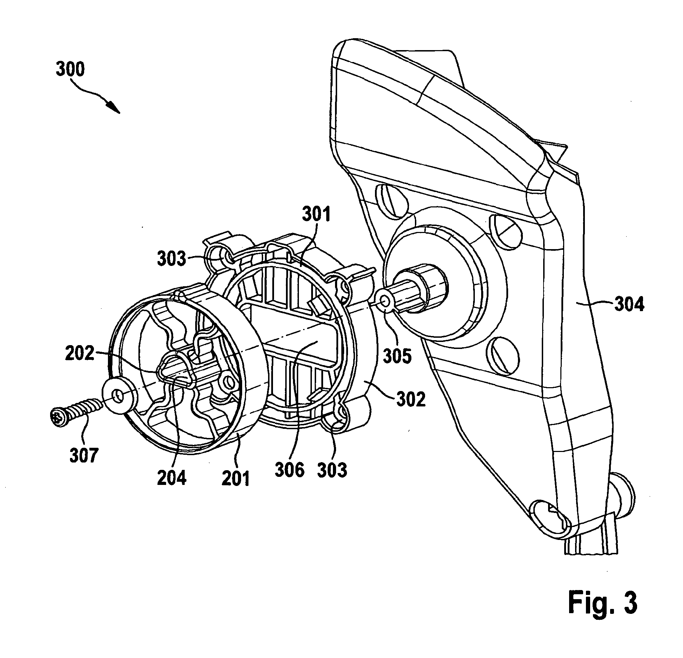

Figure 3 shows an exploded view of a connecting mechanism 300 which uses a mounting according to an embodiment of the invention. In the preferred embodiment, the flexible outer ring 201 fits onto a rigid circular ridge 301 in a second mounting means 302. In an embodiment, this second mounting means is provided with apertures 303 for connecting it to the main body of the apparatus (not shown). There is illustrated a section 304 of the outer shell, which is provided with a shaft member 305 for attachment to the mounting device. When assembled, shaft member 305 passes through an elongate aperture in the form of a slot 306, provided in second mounting means 302, and thence into aperture 204 of inner hub 202. It is then secured to the inner hub, preferably by means of a screw or bolt 307. Elongate slot 306 allows movement of shaft 305 and hence outer shell 304 relative to second mounting means 302, which is fixed to the main body of the apparatus. In the embodiment shown, the elongate slot 306 allows considerable horizontal movement of the outer shell relative to the main body, but little vertical movement. It will be appreciated by the person skilled in the art that the size and shape of this slot may be varied so as to vary the required constraint on horizontal and vertical movement of the outer shell. The mounting 200 provides a damping and constraining effect on the movement of the outer shell relative to the main body of the apparatus.

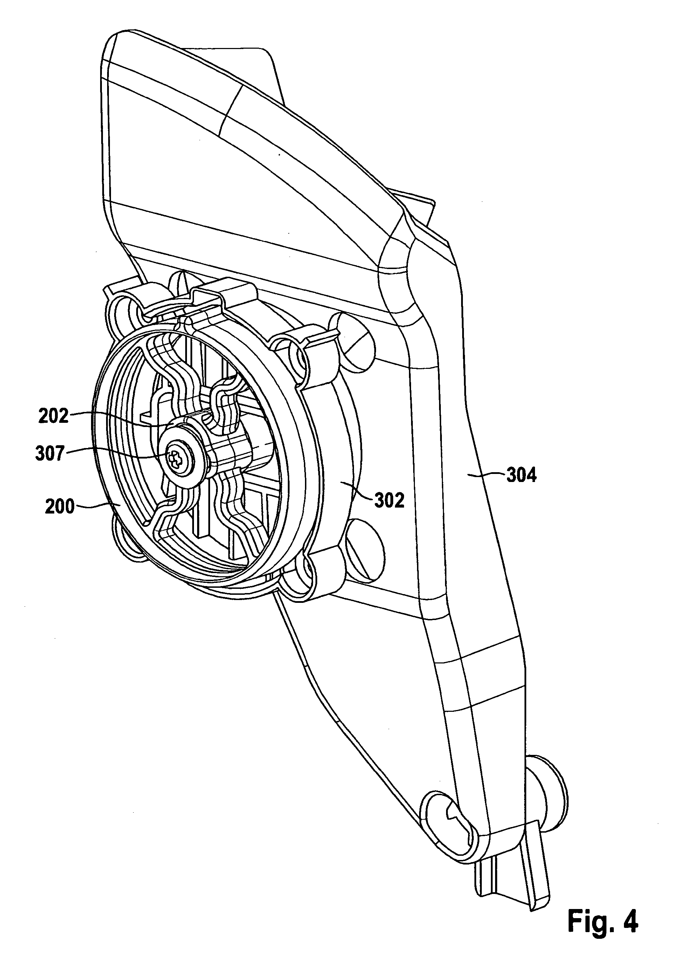

Figure 4 shows an assembled view of the connecting mechanism illustrated in Figure 3. Mounting 200 is located between main body 101 and second mounting means 302. The illustrated section 304 of the outer shell is connected to hub 202 of mounting section 200 by means of a screw 307.

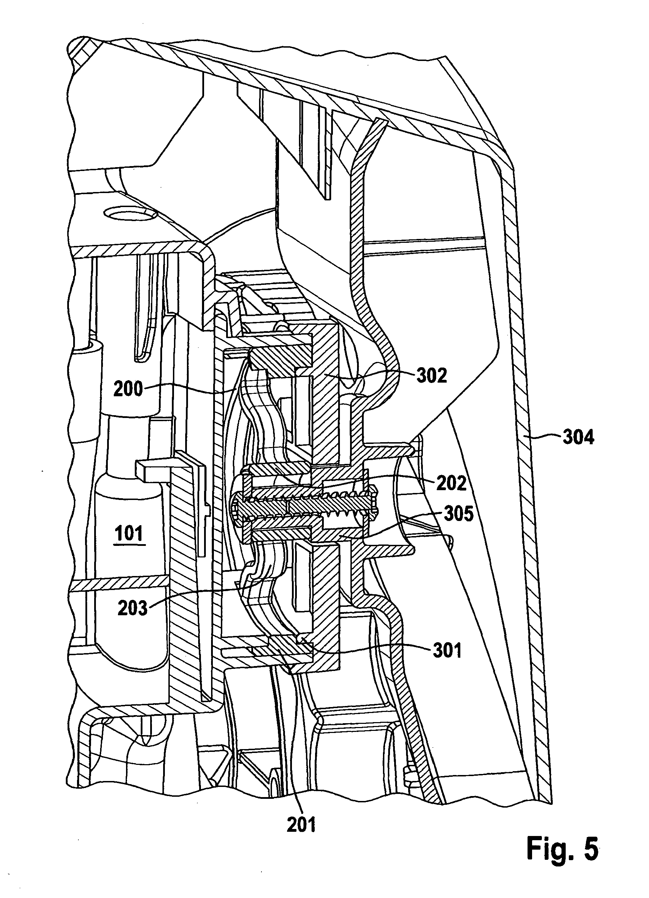

Figure 5 shows a cross section of a connecting mechanism which uses a mounting according to an embodiment of the invention. The main body of the apparatus 101 is shown, connected to second mounting means 302. Outer shell 304 is connected to mounting 200 by means of shaft 305. Mounting 200 is located between main body 101 and second mounting means 302 by means of opposing rigid circular ridges 301 and 303. Inner hub 202 and spokes 203 are illustrated.

The mounting provides a means of attachment between the outer shell and the main body of the apparatus. It allows relative movement between the shell and the main body, but also provides a damping restraint upon that movement. In a preferred embodiment of the invention, the hub, spokes and outer ring are integral with each other and are constructed from an elastomeric material. Alternative embodiments are possible, with for example rigid plastic being used for the outer ring and/or the inner hub.

It is usually the case in robotic devices such as lawn mowers, that greater horizontal deflection is needed than vertical deflection. To provide a greater stiffness in the vertical direction, the spokes are positioned so the angle in the plane parallel to the edge of the outer ring between a spoke and the vertical is less than the angle in the same plane between the spoke and the horizontal. This arrangement can be seen in Figure 2.

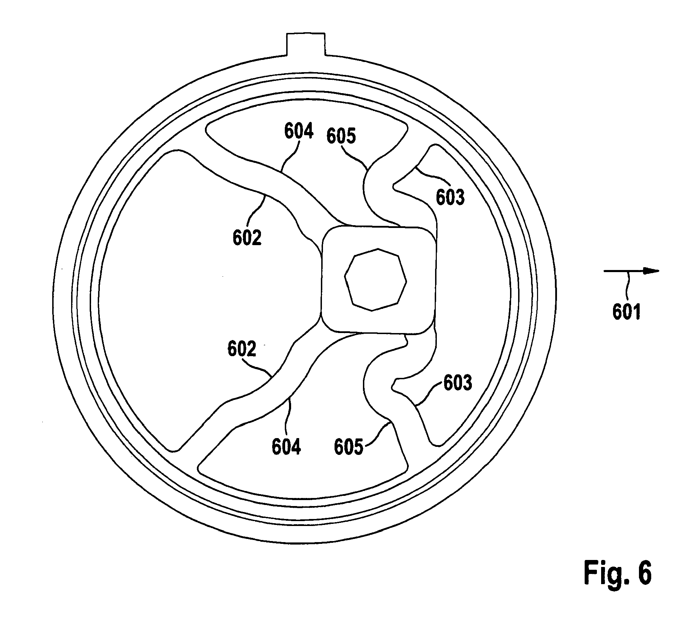

Figure 6 illustrates a mounting according to the preferred embodiment when a horizontal displacement of the outer shell occurs. The outer shell is displaced in a direction 601, causing the hub to be moved from its central position within the circle defined by the outer ring. Spokes 602 are straightened as they are stretched by the displacement and on the opposite side of the hub, spokes 603 are compressed. The combination of the straightening of the dog-leg sections 604 and the increased curvature of the dog-leg sections 605 allows a lateral movement of the hub section, whilst providing sufficient vertical support to substantially maintain the hub in its unstressed vertical position.

Figure 7 illustrates a mounting according to an embodiment of the invention when a vertical displacement of the outer shell occurs. The outer shell is displaced in a direction 701, causing the hub to be moved vertically from its central position. As in the case of horizontal displacement, two of the spokes 702 are compressed and the other two 703 are extended. The dog-leg sections of the former are straightened and the dog-leg sections of the latter two spokes are increased in curvature and have collapsed on themselves to provide a direct buffer between the hub and the outer ring of its mounting.

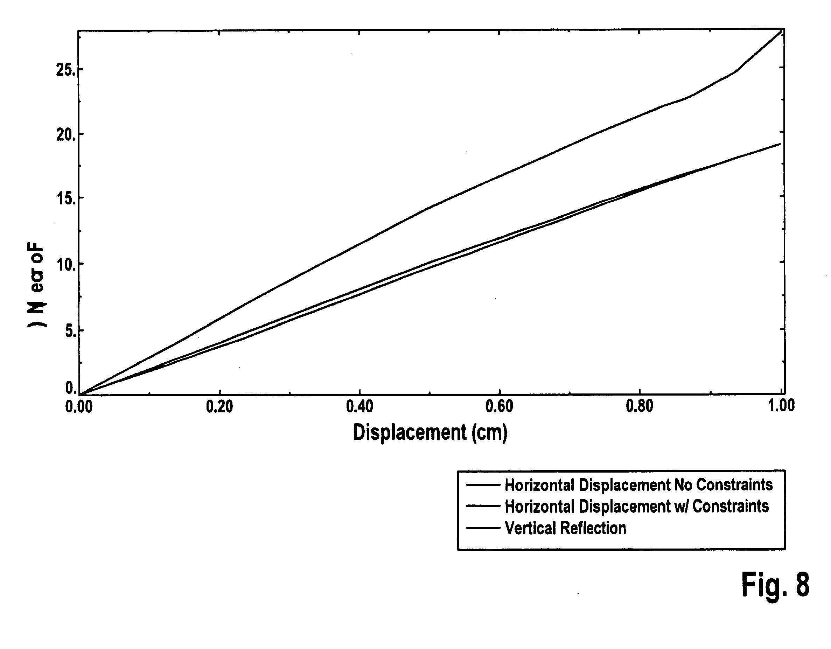

Figure 8 illustrates graphically the displacements which occur for a given force in the vertical direction and horizontal direction for a mounting according to the preferred embodiment of the invention.

## Claims

1. A flexible connecting means for connecting a first section (101) and a second section (102) of an apparatus, said connecting means comprising a first mounting means (200), wherein said first mounting means (200) comprises an inner hub (202), an outer ring (201) and a plurality of flexible spokes (203,602,603,702,703) joining said inner hub (202) with said outer ring (201), **characterised in that**:
the stiffness of said connecting means, when said inner hub (202) is moved relative to said outer ring (201), is greater in the vertical direction than in the horizontal direction,
each spoke comprises a dog-leg shaped section (205,604,605) when said mounting means (200) is in its unstressed condition which allows stretching and compression of said spoke (203,602,603,702,703), and
said spokes (203,602,603,702,703) are configured such that, as said inner hub (202) moves vertically relative to said outer ring (201), said dog-leg shaped sections (205,604,605) of two of said spokes (702) ultimately collapse on themselves to provide a direct buffer between said inner hub (202) and said outer ring (201).

2. A connecting means as claimed in claim 1, further comprising a second mounting means (302) comprising attachment means for attaching said second mounting means (302) to said first section (101) of said apparatus, a rigid ridge (301) to allow attachment to the outer ring (201) of the first mounting means (200) and an elongate aperture (306), wherein said second section (102) of said apparatus is connected to said inner hub (202) by means of a shaft (305) passing through said elongate aperture (306) of said second mounting means (302), such as to allow relative displacement between said first and said second sections (101, 102).

3. A connecting means as claimed in claim 2, wherein said outer ring (201) of said first mounting means (200) and said rigid ridge (301) of said second mounting means (302) are substantially circular.

4. A connecting means as claimed in any preceding claim, wherein said dog-leg shaped sections of said two spokes (702) depart from a direct distance between a first point where said spoke (702) is connected to said hub (202) and a second point where said spoke (702) is connected to said outer ring (201) towards a vertical line through said hub (202).

5. A connecting means as claimed in claim 4, wherein said two spokes (702) are positioned either side of a vertical line through said hub (202).

6. A connecting means as claimed in claim 4 or 5, wherein said direct distance is substantially between four and five times the width of said spokes (203,602,603,702,703) when said mounting is in its unstressed condition.

7. A connecting means as claimed in any preceding claim, comprising at least three spokes (203,602,603,702,703) connecting said outer ring (201) with said inner hub (202).

8. A connecting means as claimed in claim 7, comprising exactly four spokes (203,602,603,702,703).

9. A connecting means as claimed in any preceding claim, wherein the spokes (203,602,603,702,703), which, in operation are located above said inner hub (202), are of a different length to those which in operation are located below said inner hub (202) when said mounting is in its unstressed condition.

10. A connecting means as claimed in any preceding claim, wherein any of said spokes (203,602,603,702,703), said inner hub (202) and said outer ring (201) are constructed from an elastomeric material.

11. A connecting means as claimed in claim 10, wherein said outer ring (201) is integrally formed with said spokes (203,602,603,702,703).

12. A connecting means as claimed in claim 11, wherein said spokes (203,602,603,702,703) are integrally formed with said inner hub (202).

13. An appliance with an outer shell (102), defining a second section (102), mounted to a main body (101), defining a first section (101) of said appliance, by means of connecting means as claimed in any preceding claim.

14. An appliance as claimed in claim 13, wherein said outer section (201) is fitted around a rigid circular ridge (301).

15. An appliance as claimed in claim 13 or claim 14, wherein said appliance is in the form of a robotic lawn mower.

## Patentansprüche

1. Flexibles Verbindungsmittel zum Verbinden eines ersten Abschnitts (101) und eines zweiten Abschnitts (102) einer Vorrichtung, wobei das Verbindungsmittel ein erstes Montagemittel (200) aufweist, wobei das erste Montagemittel (200) eine innere Nabe (202), einen Außenring (201) und mehrere flexible Speichen (203, 602, 603, 702, 703) umfasst, welche die innere Nabe (202) mit dem Außenring (201) verbinden, **dadurch gekennzeichnet, dass**:
die Steifigkeit des Verbindungsmittels, wenn die innere Nabe (202) in Bezug auf den äußeren Ring bewegt wird (201), in vertikaler Richtung größer als in horizontaler Richtung ist,
jede Speiche einen Hundsbeinabschnitt (205, 604, 605) umfasst, wenn sich das Montagemittel (200) in seinem unbelasteten Zustand befindet, der die Dehnung und Verdichtung der Speiche (203, 602, 603, 702, 703) ermöglicht, und
wobei die Speichen (203, 602, 603, 702, 703) so konfiguriert sind, dass, wenn sich die innere Nabe (202) vertikal in Bezug auf den Außenring (201) bewegt, die Hundsbeinabschnitte (205, 604, 605) der zwei Speichen (702) übereinander klappen, um einen direkten Puffer zwischen der inneren Nabe (202) und dem Außenring (201) bereitzustellen.

2. Verbindungsmittel nach Anspruch 1, ferner umfassend ein zweites Montagemittel (302), umfassend Befestigungsmittel zur Befestigung des zweiten Befestigungsmittels (302) am ersten Abschnitt (101) der Vorrichtung, eine starre Rippe (301), um die Befestigung des ersten Montagemittels (200) am Außenring (201) zu ermöglichen, und eine längliche Öffnung (306), wobei der zweite Abschnitt (102) der Vorrichtung mit der inneren Nabe (202) mittels einer Welle (305) verbunden ist, die durch die längliche Öffnung (306) des zweiten Montagemittels (302) verläuft, um eine relative Verschiebung zwischen dem ersten und dem zweiten Abschnitt (101, 102) zu ermöglichen.

3. Verbindungsmittel nach Anspruch 2, wobei der Außenring (201) des ersten Montagemittels (200) und die starre Rippe (301) des zweiten Monagemittels (302) im Wesentlichen kreisförmig sind.

4. Verbindungsmittel nach einem der vorhergehenden Ansprüche, wobei die Hundsbeinabschnitte der zwei Speichen (702) von einem direkten Abstand zwischen einem ersten Punkt, an dem die Speiche (702) mit der Nabe (202) verbunden ist, und einem zweiten Punkt, an dem die Speiche (702) mit dem Außenring (201) verbunden ist, in Richtung einer vertikalen Linie durch die Nabe (202) entfernt.

5. Verbindungsmittel nach Anspruch 4, wobei die zwei Speichen (702) auf jeder Seite einer vertikalen Linie durch die Nabe (202) angeordnet sind.

6. Verbindungsmittel nach Anspruch 4 oder 5, wobei der direkte Abstand im Wesentlichen der vier- und fünffachen Breite der Speichen (203, 602, 603, 702, 703) entspricht, wenn sich die Montage im unbelasteten Zustand befindet.

7. Verbindungsmittel nach einem der vorhergehenden Ansprüche, umfassend mindestens drei Speichen (203, 602, 603, 702, 703), die den Außenring (201) mit der inneren Nabe (202) verbinden.

8. Verbindungsmittel nach Anspruch 7, umfassend exakt vier Speichen (203, 602, 603, 702, 703).

9. Verbindungsmittel nach einem der vorhergehenden Ansprüche, wobei die Speichen (203, 602, 603, 702, 703), die während des Betriebs oberhalb der inneren Nabe (202) angeordnet sind, eine andere Länge aufweisen, als diejenigen, die während des Betriebs unterhalb der inneren Nabe (202) angeordnet sind, wenn sich die Montage im unbelasteten Zustand befindet.

10. Verbindungsmittel nach einem der vorhergehenden Ansprüche, wobei jede der Speichen (203, 602, 603, 702, 703), die innere Nabe (202) und der Außenring (201) aus einem elastomeren Material ausgebildet sind.

11. Verbindungsmittel nach Anspruch 10, wobei der Außenring (201) einstückig mit den Speichen (203, 602, 603, 702, 703) ausgebildet ist.

12. Verbindungsmittel nach Anspruch 11, wobei die Speichen (203, 602, 603, 702, 703) einstückig mit der inneren Nabe (202) ausgebildet sind.

13. Gerät mit einer Außenschale (102), die einen zweiten Abschnitt (102) definiert, der an einem Hauptkörper (101), der einen ersten Abschnitt (101) des Geräts definiert, über das Verbindungsmittel nach einem der vorhergehenden Ansprüche montiert ist.

14. Gerät nach Anspruch 13, wobei der äußere Abschnitt (201) um eine starre ringförmige Rippe (301) gelegt ist.

15. Gerät nach Anspruch 13 oder Anspruch 14, wobei das Instrument in Form eines selbstfahrenden Rasenmähers vorliegt.

## Revendications

1. Moyen de liaison souple destiné à relier une première section (101) et une deuxième section (102) d'un appareil, ledit moyen de liaison comportant un premier moyen (200) de montage, ledit premier moyen (200) de montage comportant un moyeu intérieur (202), un anneau extérieur (201) et une pluralité de rayons souples (203, 602, 603, 702, 703) joignant ledit moyeu intérieur (202) audit anneau extérieur (201), **caractérisé en ce que** :
la rigidité dudit moyen de liaison, lorsque ledit moyeu intérieur (202) est déplacé par rapport audit anneau extérieur (201), est plus grande dans la direction verticale que dans la direction horizontale,
chaque rayon comporte une section (205, 604, 605) de forme tortueuse lorsque ledit moyen (200) de montage se trouve dans son état exempt de contrainte qui permet l'étirement et la compression dudit rayon (203, 602, 603, 702, 703), et
lesdits rayons (203, 602, 603, 702, 703) sont configurés de telle sorte que, tandis que ledit moyeu intérieur (202) se déplace verticalement par rapport audit anneau extérieur (201), lesdites sections (205, 604, 605) de forme tortueuse de deux desdits rayons (702) s'affaissent finalement sur elles-mêmes pour constituer un amortisseur direct entre ledit moyeu intérieur (202) et ledit anneau extérieur (201).

2. Moyen de liaison selon la revendication 1, comportant en outre un deuxième moyen (302) de montage comportant des moyens de fixation destinés à fixer ledit deuxième moyen (302) de montage à ladite première section (101) dudit appareil, une nervure rigide (301) servant à permettre la fixation à l'anneau extérieur (201) du premier moyen (200) de montage et une ouverture allongée (306), ladite deuxième section (102) dudit appareil étant reliée audit moyeu intérieur (202) au moyen d'un arbre (305) passant à travers ladite ouverture allongée (306) dudit deuxième moyen (302) de montage, de façon à permettre un décalage relatif entre lesdites première et deuxième sections (101, 102).

3. Moyen de liaison selon la revendication 2, ledit anneau extérieur (201) dudit premier moyen (200) de montage et ladite nervure rigide (301) dudit deuxième moyen (302) de montage étant sensiblement circulaires.

4. Moyen de liaison selon l'une quelconque des revendications précédentes, lesdites sections de forme tortueuse desdits deux rayons (702) s'écartant d'une distance directe entre un premier point où ledit rayon (702) est relié audit moyeu (202) et un deuxième point où ledit rayon (702) est relié audit anneau extérieur (201) en direction d'une ligne verticale traversant ledit moyeu (202).

5. Moyen de liaison selon la revendication 4, lesdits deux rayons (702) étant positionnés de part et d'autre d'une ligne verticale traversant ledit moyeu (202).

6. Moyen de liaison selon la revendication 4 ou 5, ladite distance directe étant comprise sensiblement entre quatre et cinq fois la largeur desdits rayons (203, 602, 603, 702, 703) lorsque ledit support se trouve dans son état exempt de contrainte.

7. Moyen de liaison selon l'une quelconque des revendications précédentes, comportant au moins trois rayons (203, 602, 603, 702, 703) reliant ledit anneau extérieur (201) audit moyeu intérieur (202).

8. Moyen de liaison selon la revendication 7, comportant exactement quatre rayons (203, 602, 603, 702, 703).

9. Moyen de liaison selon l'une quelconque des revendications précédentes, les rayons (203, 602, 603, 702, 703) qui, en cours de fonctionnement, sont situés au-dessus dudit moyeu intérieur (202), étant d'une longueur différente de ceux qui, en cours de fonctionnement, sont situés au-dessous dudit moyeu intérieur (202) lorsque ledit support se trouve dans son état exempt de contrainte.

10. Moyen de liaison selon l'une quelconque des revendications précédentes, des éléments quelconques parmi lesdits rayons (203, 602, 603, 702, 703), ledit moyeu intérieur (202) et ledit anneau extérieur (201) étant réalisés à partir d'un matériau élastomérique.

11. Moyen de liaison selon la revendication 10, ledit anneau extérieur (201) étant formé d'un seul tenant avec lesdits rayons (203, 602, 603, 702, 703).

12. Moyen de liaison selon la revendication 11, lesdits rayons (203, 602, 603, 702, 703) étant formés d'un seul tenant avec ledit moyeu intérieur (202).

13. Appareil doté d'une coque extérieure (102), définissant une deuxième section (102), montée sur un corps principal (101), définissant une première section (101) dudit appareil, au moyen d'un moyen de liaison selon l'une quelconque des revendications précédentes.

14. Appareil selon la revendication 13, ladite section extérieure (201) étant ajustée autour d'une nervure rigide circulaire (301).

15. Appareil selon la revendication 13 ou la revendication 14, ledit appareil se présentant sous la forme d'une tondeuse à gazon robotisée.
